# EUROPEAN PATENT APPLICATION

(11) **EP 4 845 302 A1**
(43) Date of publication of application: **25.11.2026**
(21) Application number: 25760710.1
(22) Date of filing: 24.01.2025
(51) Int. Cl.: H04W 88/10

(54) **COMMUNICATION METHOD AND COMMUNICATION APPARATUS**

(30) Priority: 27.02.2024 CN 202410216769
(71) Applicant: Huawei Technologies Co., Ltd., Shenzhen, Guangdong 518129 (CN)
(72) Inventor: QIAO, Yunfei, Shenzhen, Guangdong 518129 (CN); CHEN, Ying, Shenzhen, Guangdong 518129 (CN); WANG, Jun, Shenzhen, Guangdong 518129 (CN)
(74) Representative: Grünecker Patent- und Rechtsanwälte PartG mbB
(86) International application number: PCT/CN2025/074568
(87) International publication number: WO 2025/180166

(57) **Abstract**

This application provides a communication method and a communication apparatus. A first apparatus allocates and configures, for terminals served by different PLMNs in a first cell, a plurality of cell common parameters, where the different PLMNs in the first cell share an access network resource. Therefore, according to the method, different cell common parameters may be configured for terminals served by different PLMNs, and the different cell common parameters are sent to the terminals through signaling to provide differentiated cell configurations for the terminals served by the different PLMNs sharing the access network resource in the first cell.

## Description

This application claims priority to Chinese Patent Application No. 202410216769.0, filed with the China National Intellectual Property Administration on February 27, 2024 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Radio access network sharing (RAN (radio access network) sharing) is cooperation or sharing of telecommunications network infrastructure or network devices. RAN sharing provides a network construction mode that reduces network deployment costs and expands the network service range. For example, different operators may share a same set of RAN resources, and therefore do not need to deploy respective RAN devices in each area, thereby reducing construction costs and operation and maintenance costs. However, when a shared cell is implemented among the different operators, due to different service requirements and different resource requirements of the operators for different geographical areas, how to allocate the shared RAN resources to the different operators becomes a problem to be resolved.

### SUMMARY

This application provides a communication method and a communication apparatus. According to the method, shared access network resources are configured for users through signaling, so that terminals served by different public land mobile networks (public land mobile networks, PLMNs) can obtain differentiated access network resources.

According to a first aspect, this application provides a communication method. The method is performed by a first apparatus. For example, the first apparatus may be a network device (for example, a satellite or a base station), or a component (for example, a processor, a chip, or a chip system) of a network device, or a logical module that can implement all or some functions of a network device. The first apparatus separately configures, for terminals served by different public land mobile networks (public land mobile networks, PLMNs) in a first cell, a plurality of cell common parameters, where the different PLMNs in the first cell share an access network resource. The first apparatus sends the plurality of cell common parameters.

According to the method, the first apparatus may configure different cell common parameters for the terminals served by the different PLMNs (which may also be referred to as terminals belonging to different operators), and send the different cell common parameters to the terminals through signaling, to provide differentiated cell configurations for the terminals served by the different PLMNs in a shared cell.

In a possible implementation, the first apparatus sends a first system message of the first cell, where the first system message includes the plurality of cell common parameters.

In this implementation, the first system message (for example, a system information block (system information block, SIB), which may be specifically a SIB1) of the first cell may carry the plurality of cell common parameters for the different PLMNs. The first apparatus only needs to send the SIB1, thereby helping reduce signaling overheads.

In a possible implementation, the first apparatus schedules at least one second system message in the first cell, where the at least one second system message indicates corresponding cell common parameters.

In this implementation, the first apparatus may schedule at least one second system message (for example, different SIBs designed for the different PLMNs) by using the SIB1, to indicate cell common parameters corresponding to the different PLMNs.

In a possible implementation, the first apparatus configures a plurality of physical downlink control channel (physical downlink control channel, PDCCH) search spaces, where the plurality of physical downlink control channel search spaces include a plurality of pieces of control information, and the plurality of pieces of control information are used for a terminal to receive corresponding cell common parameters.

In a possible implementation, the first apparatus sends a first physical downlink control channel scrambled by a system information radio network temporary identifier (system information radio network temporary identifier, SI-RNTI), where the first physical downlink control channel indicates the plurality of cell common parameters.

In the foregoing implementation, the first apparatus delivers a plurality of SIB1s. The plurality of SIB1s may be used to configure a plurality of PDCCH search spaces by using a management information block (master information block, MIB), so that the terminals served by the different PLMNs can retrieve control information in corresponding search spaces, to receive corresponding cell common parameters. Alternatively, the plurality of SIB1s may be scheduled by using the PDCCH scrambled by using the SI-RNTI, where the PDCCH indicates the plurality of cell common parameters corresponding to the terminals served by the different PLMNs.

In a possible implementation, the first apparatus sends first indication information, where the first indication information indicates one or more random access resources allocated to the terminals served by the different PLMNs in the first cell.

In a possible implementation, any one of the one or more random access resources is exclusively used by one network or shared by a plurality of networks.

In the foregoing implementation, the first apparatus may configure different random access resources for the terminals served by the different PLMNs, to provide differentiated access capacities in the shared cell and optimize resource allocation.

In a possible implementation, the first apparatus separately configures a plurality of mobility management parameters for the terminals served by the different PLMNs in the first cell, and sends the plurality of mobility management parameters.

In this implementation, the first apparatus may configure different mobility management parameters (for example, paging configuration parameters) for the terminals served by the different PLMNs, to provide differentiated paging resources in the shared cell and optimize resource allocation.

In a possible implementation, the first apparatus sends a first system message of the first cell, where the first system message includes the plurality of mobility management parameters.

In this implementation, the first system message (for example, a SIB1) of the first cell may carry the plurality of mobility management parameters for the different PLMNs. The first apparatus only needs to send the SIB1, thereby helping reduce signaling overheads.

In a possible implementation, the first apparatus sends paging messages in different system frames, where the different system frames are associated with the different PLMNs.

In a possible implementation, the first apparatus sends a second physical downlink control channel scrambled by a paging radio network temporary identifier (paging RNTI, P-RNTI), where the second physical downlink control channel indicates the plurality of mobility management parameters.

In the foregoing implementation, the first apparatus may send the paging messages in the different system frames, or schedule, by using the PDCCH scrambled by using the P-RNTI, the plurality of mobility management parameters corresponding to the terminals served by the different PLMNs, so that the terminals served by the different PLMNs obtain differentiated paging message receiving manners.

In a possible implementation, the first apparatus sends a paging message, where the paging message includes a first identifier, and the first identifier indicates terminals that are served by different PLMNs and have a same user identifier in the first cell.

In this implementation, when paging configurations in the shared cell are consistent, the first apparatus may additionally add an identifier of a PLMN or another incremental indication to the paging message, to distinguish between the terminals served by the different PLMNs and having the same user identifier, thereby avoiding incorrect data transmission in a subsequent data transmission procedure.

In a possible implementation, the first apparatus separately configures a plurality of cell measurement parameters for the terminals served by the different PLMNs in the first cell, and sends the plurality of cell measurement parameters.

In this implementation, the first apparatus may configure different cell measurement parameters for the terminals served by the different PLMNs, so that the terminals served by the different PLMNs can perform cell measurement and reselection to obtain a corresponding dedicated network.

According to a second aspect, this application provides a communication method. The method is performed by a second apparatus. For example, the second apparatus may be a terminal (for example, a tag), or a communication module in a terminal, or a circuit or chip (for example, a modem (Modem) chip, also referred to as a baseband (baseband) chip, or a system on a chip (system on a chip, SoC) chip or a system in package (system in package, SIP) chip including a modem core) that is responsible for a communication function in a terminal. The second apparatus receives a plurality of cell common parameters that are separately configured by a first apparatus for terminals served by different PLMNs in a first cell, where the different PLMNs in the first cell share an access network resource. The second apparatus configures corresponding cell common parameters.

In the method, the second apparatus may receive signaling sent by the first apparatus, to obtain different cell common parameters, so as to implement differentiated cell configurations for the terminals served by the different PLMNs in the shared cell.

In a possible implementation, the second apparatus receives a first system message of the first cell, where the first system message includes the plurality of cell common parameters.

In this implementation, the second apparatus may obtain, by receiving the first system message (for example, a SIB1) of the first cell, the plurality of cell common parameters for the different PLMNs, thereby reducing signaling overheads.

In a possible implementation, the second apparatus obtains at least one second system message based on a first system message of the first cell, where the at least one second system message indicates corresponding cell common parameters.

In this implementation, the second apparatus may obtain, by receiving the at least one second system message (for example, different SIBs designed for different PLMNs), the cell common parameters corresponding to the different PLMNs.

In a possible implementation, the second apparatus retrieves corresponding control information in a plurality of physical downlink control channel search spaces, and receives a corresponding cell common parameter.

In a possible implementation, the second apparatus receives a first physical downlink control channel scrambled by a system information radio network temporary identifier SI-RNTI, where the first physical downlink control channel indicates the plurality of cell common parameters.

In the foregoing implementation, the second apparatus may receive a plurality of SIB1s. The plurality of SIB1s may be used to configure a plurality of PDCCH search spaces by using a MIB, so that the terminals served by the different PLMNs can retrieve control information in corresponding search spaces, to receive corresponding cell common parameters. Alternatively, the plurality of SIB1s may be scheduled by using the PDCCH scrambled by using the SI-RNTI.

In a possible implementation, the second apparatus receives first indication information, where the first indication information indicates one or more random access resources allocated to the terminals served by the different PLMNs in the first cell.

In a possible implementation, any one of the one or more random access resources is exclusively used by one network or shared by a plurality of networks.

In the foregoing implementation, the second apparatus may receive different random access resources, to implement differentiated access capacities in the shared cell and optimize resource allocation.

In a possible implementation, the second apparatus receives a plurality of mobility management parameters that are separately configured by the first apparatus for the terminals served by the different PLMNs in the first cell. The second apparatus configures the corresponding mobility management parameters.

In this implementation, different mobility management parameters (for example, paging configuration parameters) may be configured for the terminals served by the different PLMNs, to implement differentiated paging resource allocation in the shared cell.

In a possible implementation, the second apparatus receives a first system message of the first cell, where the first system message includes the plurality of mobility management parameters.

In this implementation, the first system message (for example, a SIB1) of the first cell may carry the plurality of mobility management parameters for the different PLMNs. The second apparatus receives the SIB1 and may obtain the corresponding mobility management parameters.

In a possible implementation, the second apparatus retrieves paging messages in system frames whose system frame numbers meet a first condition, where different system frames are associated with different PLMNs.

In a possible implementation, the second apparatus receives a second physical downlink control channel scrambled by a paging radio network temporary identifier P-RNTI, where the second physical downlink control channel indicates the plurality of mobility management parameters.

In the foregoing implementation, the second apparatus may receive the paging messages in the different system frames or the second physical downlink control channel scrambled by the P-RNTI, to obtain the corresponding mobility management parameters.

In a possible implementation, the second apparatus receives a paging message, where the paging message includes a first identifier, and the first identifier indicates terminals that are served by different PLMNs and have a same user identifier in the first cell.

In this implementation, when paging configurations in the shared cell are consistent, the second apparatus distinguishes the paging message corresponding to the second apparatus through an identifier of a PLMN or another incremental indication additionally added to the paging message.

In a possible implementation, the second apparatus receives a plurality of cell measurement parameters that are separately configured by the first apparatus for the terminals served by the different PLMNs in the first cell. The second apparatus configures corresponding cell measurement parameters.

In this implementation, the second apparatus may receive and configure the corresponding cell measurement parameters, so that the terminals served by the different PLMNs can perform cell measurement and reselection to obtain a corresponding dedicated network.

According to a third aspect, this application provides a communication apparatus. The communication apparatus may be a network device, or a component (for example, a processor, a chip, or a chip system) of a network device, or an apparatus that can be used in conjunction with a network device. In a possible implementation, the communication apparatus has functions of implementing the first aspect. For example, the communication apparatus includes a corresponding module, unit, or means for performing the operations in the first aspect. The module, unit, or means may be specifically implemented by using software, hardware, or a combination of software and hardware.

In a possible implementation, the communication apparatus includes a communication unit and a processing unit. The processing unit is configured to separately configure, for terminals served by different PLMNs in a first cell, a plurality of cell common parameters, where the different PLMNs in the first cell share an access network resource. The communication unit is configured to send the plurality of cell common parameters.

In this implementation, the communication apparatus may configure, for terminals served by different PLMNs, different cell common parameters, and send the different cell common parameters to the terminals through signaling, to provide differentiated cell configurations for the terminals served by the different PLMNs in a shared cell.

Optionally, for another possible implementation of the third aspect, refer to corresponding descriptions of another possible implementation of the first aspect. Details are not described herein again.

According to a fourth aspect, this application provides a communication apparatus. The communication apparatus may be a terminal, or a component (for example, a processor, a chip, or a chip system) of a terminal, or an apparatus that can be used in conjunction with a terminal. In a possible implementation, the communication apparatus has functions of implementing the second aspect. For example, the communication apparatus includes a corresponding module, unit, or means (means) for performing the operations in the second aspect. The module, unit, or means may be specifically implemented by using software, hardware, or a combination of software and hardware.

In a possible implementation, the communication apparatus includes a communication unit and a processing unit. The communication unit is configured to receive a plurality of cell common parameters that are separately configured by a first apparatus for terminals served by different PLMNs in a first cell, where the different PLMNs in the first cell share an access network resource. The processing unit is configured to configure corresponding cell common parameters.

In this implementation, the communication apparatus may receive signaling sent by the first apparatus, to obtain different cell common parameters, so as to implement differentiated cell configurations for the terminals served by the different PLMNs in the shared cell.

Optionally, for another possible implementation of the fourth aspect, refer to corresponding descriptions of another possible implementation of the second aspect. Details are not described herein again.

According to a fifth aspect, this application provides a communication apparatus. The communication apparatus includes a memory and one or more processors. The memory is configured to store a part or all of computer programs or instructions necessary for implementing functions in at least one of the first aspect and the second aspect. The one or more processors may execute the computer programs or the instructions. When the computer programs or the instructions are executed, the communication apparatus is enabled to implement at least one of the following: the method according to any one of the first aspect and the possible implementations of the first aspect, and the method according to any one of the second aspect and the possible implementations of the second aspect.

In a possible design, the communication apparatus may further include an interface circuit, where the processor is configured to communicate with another apparatus or component through the interface circuit.

In a possible design, the communication apparatus may further include the memory.

In a possible design, the communication apparatus may be a terminal, a communication module in a terminal, or a chip (for example, a modem chip, or an SoC or a SIP chip including a modem module) that is responsible for a communication function in a terminal.

According to a sixth aspect, this application provides a communication apparatus, including a processor and an interface circuit. The interface circuit is configured to: receive a signal from another communication apparatus and transmit the signal to the processor, or send a signal from the processor to another communication apparatus. The processor is configured to implement, via a logic circuit or executing code instructions, at least one of the following: the method according to any one of the first aspect and the possible implementations of the first aspect, and the method according to any one of the second aspect and the possible implementations of the second aspect.

According to a seventh aspect, this application provides a communication system. The communication system includes at least one apparatus or device in the third aspect to the sixth aspect, so that the at least one apparatus or device performs at least one of the following: the method according to any one of the first aspect and the possible implementations of the first aspect, and the method according to any one of the second aspect and the possible implementations of the second aspect.

According to an eighth aspect, this application provides a computer-readable storage medium. The computer-readable storage medium stores instructions. When the instructions are run on a computer, the computer is enabled to perform at least one of the following: the method according to any one of the first aspect and the possible implementations of the first aspect, and the method according to any one of the second aspect and the possible implementations of the second aspect.

According to a ninth aspect, this application provides a computer program product, including instructions. When the instructions are run on a computer, the computer is enabled to perform at least one of the following: the method according to any one of the first aspect and the possible implementations of the first aspect, and the method according to any one of the second aspect and the possible implementations of the second aspect.

According to a tenth aspect, this application provides a chip, and the chip includes a processor (or a logic circuit). Optionally, the chip may further include a communication interface (or an interface), configured to implement at least one of the following: the method according to any one of the first aspect and the possible implementations of the first aspect, and the method according to any one of the second aspect and the possible implementations of the second aspect. In a possible implementation, if the chip is the smallest processing unit in an entire device, the chip may be a processor, or may include a processor and a memory, or may include a processor, a memory, and a transceiver, and is configured to implement at least one of the following: the method according to any one of the first aspect and the possible implementations of the first aspect, and the method according to any one of the second aspect and the possible implementations of the second aspect.

According to an eleventh aspect, this application provides a chip system. The chip system includes a processor and an interface. Optionally, the chip system may further include a memory, configured to implement at least one of the following: the method according to any one of the first aspect and the possible implementations of the first aspect, and the method according to any one of the second aspect and the possible implementations of the second aspect. The chip system may include a chip, or may include a chip and another discrete component.

### BRIEF DESCRIPTION OF DRAWINGS

FIG. 1 is a diagram of a network architecture according to this application;
FIG. 2 is a schematic flowchart of a communication method according to this application;
FIG. 3 is a diagram in which a first apparatus configures a plurality of PDCCH search spaces and indication manners according to this application;
FIG. 4 is a diagram of scheduling a plurality of cell common parameters by using a PDCCH scrambled by using an SI-RNTI according to this application;
FIG. 5 is a diagram of a mapping relationship between a synchronization signal block and an RO resource according to this application;
FIG. 6 is a diagram of a communication apparatus according to this application; and
FIG. 7 is a diagram of another communication apparatus according to this application.

### DESCRIPTION OF EMBODIMENTS

The following describes the technical solutions in embodiments of this application with reference to the accompanying drawings in embodiments of this application.

For ease of understanding, the following describes in detail definitions of related terms in this application.

### 1. Network architecture

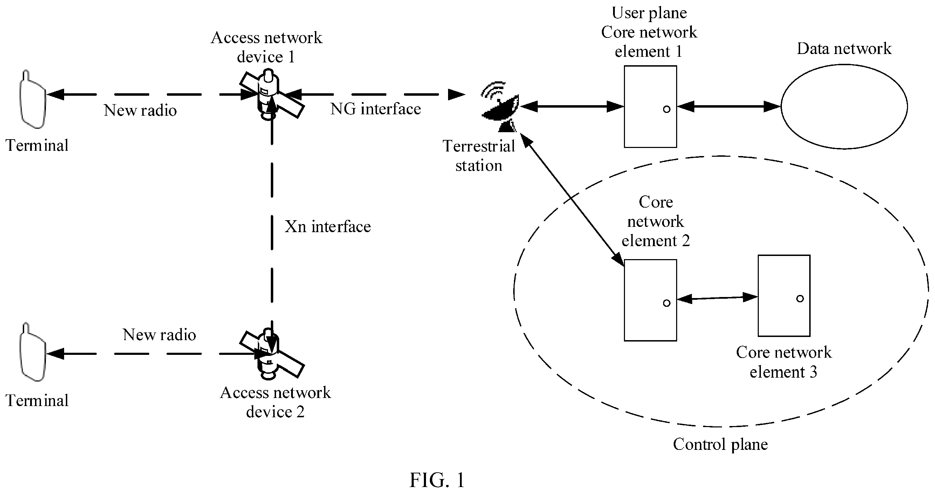

For example, a communication method provided in this application may be applied to a network architecture shown in FIG. 1. The network architecture shown in FIG. 1 includes devices or functional network elements such as terminals, access network devices, and core network elements. It may be understood that FIG. 1 is merely an example, and only some devices or functional network elements are shown (for example, more terminals and/or access network devices may be further included, and a form of the access network device may not be limited to a satellite or the like). The network architecture to which the communication method is applied is not limited in this application.

The access network device is a device with a wireless transceiver function, and is configured to communicate with a terminal device. For example, the access network device is a radio access network (radio access network, RAN) node that connects the terminal device to a wireless network. The RAN node includes but is not limited to a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a base band unit (base band unit, BBU), a wireless fidelity (wireless fidelity, Wi-Fi) access point (access point, AP), an integrated access and backhaul (integrated access and backhaul, IAB) device, a satellite, or the like. It may be understood that, when the access network device is a satellite, a terrestrial station matching the satellite may also be considered as a part of the access network device.

The access network device may communicate and interact with the core network device, to provide a communication service for the terminal device. The core network device is, for example, a device in a core network (core network, CN) of a 5G network. As a bearer network, the core network provides an interface for connecting to a data network, provides communication connection, authentication, management, and policy control for a terminal, carries a data service, and the like.

The terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

In this application, a function of the base station may be performed by a module (for example, a chip) in the base station, or may be performed by a control subsystem including the function of the base station. The control subsystem including the function of the base station herein may be a control center in the foregoing application scenarios, such as the smart grid scenario, the industrial control scenario, the smart transportation scenario, and the smart city scenario. The function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered with by a signal from a neighboring cell.

### 2. Non-terrestrial network (non-terrestrial network, NTN)

The NTN includes nodes such as a satellite network, a high-altitude platform station, and an uncrewed aerial vehicle, has significant advantages such as global coverage, long-distance transmission, flexible networking, easy deployment, and geographical condition independence, and has been widely applied to a plurality of fields such as maritime communication, positioning and navigation, disaster relief, scientific experiments, video broadcasting, and earth observation. A terrestrial 5G network and a satellite network are integrated with mutual complementarity, to jointly form a space-air-ground-sea integrated communication network that provides seamless global coverage, so as to meet a plurality of service requirements of users.

As an important part of the NTN, the next-generation satellite network generally has a trend of being ultra dense and heterogeneous. First, a scale of the satellite network has expanded from 66 satellites in the Iridium constellation to 720 satellites in the OneWeb constellation, and finally to over 12,000 satellites in the Starlink (Starlink) ultra-dense LEO satellite constellation. Second, the satellite network has a heterogeneous characteristic, evolving from a conventional single-layer communication network to a multi-layer communication network; and a communication satellite network tends to have complex and diversified functions, and is gradually compatible with and supports functions of navigation enhancement, earth observation, on-orbit processing of multidimensional information, and the like.

### 3. Network sharing

Radio access network sharing (RAN sharing) is cooperation or sharing of telecommunications network infrastructure or network devices. RAN sharing provides a network construction mode that reduces network deployment costs and expands the network service range. For example, different operators may share a same set of RAN resources, and therefore do not need to deploy respective RAN devices in each area, thereby reducing construction costs and operation and maintenance costs. In addition, with reference to an NTN scenario, because a satellite-borne base station moves, a coverage area of the satellite-borne base station changes globally, so that a base station of an operator has an opportunity to provide services for users of another operator. Therefore, introducing RAN sharing helps further increase revenue of operators.

From the perspective of base station resources and spectrum resources, network sharing may be classified into co-carrier RAN sharing, dedicated-carrier RAN sharing, and hybrid RAN sharing. For example, RAN sharing with common carrier means that a plurality of operators share RAN resources, including spectrum resources and base station hardware resources. RAN sharing with dedicated carrier means that different operators have independent spectrum resources and share only base station hardware resources. The hybrid RAN sharing means that operators have a plurality of spectrum resources, and different spectrum resources can be shared by different operators or used independently. The network sharing described in this application may include but is not limited to the foregoing three types of sharing.

Existing shared base station deployment modes have addressed RAN sharing issues. However, when a shared cell is implemented among the different operators, due to different service requirements and different resource requirements of the operators for different geographical areas, how to allocate the shared RAN resources to the different operators remains a problem to be resolved.

To resolve the foregoing problem, this application provides a communication method. According to the communication method, shared access network resources are configured for users through signaling, so that terminals served by different PLMNs can obtain differentiated access network resources.

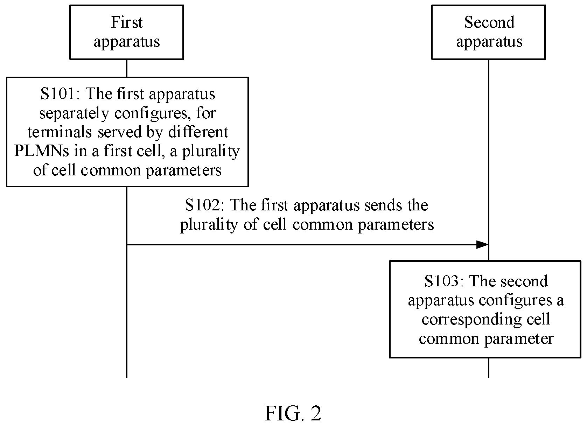

For example, FIG. 2 is a schematic flowchart of a communication method according to this application. The method is implemented through interaction between a first apparatus and a second apparatus. For example, the first apparatus is an access network device (for example, a base station or a satellite), and the second apparatus is a terminal. The method includes the following steps.

S101: The first apparatus separately configures, for terminals served by different PLMNs in a first cell, a plurality of cell common parameters.

Different operators may provide different end-to-end quality of service (quality of service, QoS) assurance for users. Therefore, there may be different air interface configurations, and then differentiated cell configurations need to be provided for the terminals served by the different PLMNs in the first cell. The different PLMNs indicate different operators. The cell configurations include cell common parameters. The first cell may also be referred to as a shared cell, indicating that the different PLMNs can share resources (such as base station resources and spectrum resources) of the first cell.

In a possible implementation, the cell common parameter may include but is not limited to data channel configuration information, control channel configuration information, a system message, and the like. For example, for a terminal served by a first PLMN, the first apparatus may configure a first cell common parameter; for a terminal served by a second PLMN, the first apparatus may configure a second cell common parameter; and for a terminal served by the third PLMN, the first apparatus may configure a third cell common parameter. The first cell common parameter, the second cell common parameter, and the third cell common parameter belong to the plurality of cell common parameters, and the first cell common parameter, the second cell common parameter, and the third cell common parameter are different from each other. Optionally, the first cell common parameter is different from the second cell common parameter. For example, both the first cell common parameter and the second cell common parameter may include the control channel configuration information, and the control channel configuration information of the first cell common parameter is different from the control channel configuration information of the second cell common parameter. For another example, the second cell common parameter is different from the third cell common parameter, and the second cell common parameter may include the control channel configuration information, but the third cell common parameter does not include the control channel configuration information. A specific implementation is not limited in this application.

S102: The first apparatus sends the plurality of cell common parameters. Correspondingly, the second apparatus receives the plurality of cell common parameters.

The first apparatus usually sends the plurality of cell common parameters in a broadcast manner. For example, the first apparatus broadcasts the system message, to indicate the plurality of cell common parameters by using the system message.

In a possible implementation, the first apparatus sends a first system message of the first cell, where the first system message includes the plurality of cell common parameters. For example, the first system message is a SIB1, and the first apparatus broadcasts the SIB1, where the SIB1 carries the plurality of cell common parameters for the different PLMNs, so that the SIB1 indicates differentiated cell common parameters.

In a possible implementation, the first apparatus schedules at least one second system message in the first cell, where the at least one second system message indicates corresponding cell common parameters. For example, the first apparatus schedules the at least one second system message by using system scheduling information (for example, SI-SchedulingInfo) in a SIB1. For example, the at least one second system message may be represented as SIB1_for_PLMNx, where PLMNx represents different PLMNs, for example, PLMN1 represents the first PLMN, and PLMN2 represents the second PLMN. The at least one second system message SIB1_for_PLMNx indicates a cell common parameter of PLMNx.

In a possible implementation, the first apparatus sends a plurality of SIB1s, and the plurality of SIB1s may be specifically implemented in the following manner:
The first apparatus configures a plurality of physical downlink control channel search spaces, where the plurality of physical downlink control channel search spaces include a plurality of pieces of control information, and the plurality of pieces of control information are used for a terminal to receive corresponding cell common parameters.

Alternatively, the first apparatus sends a first physical downlink control channel scrambled by a system information radio network temporary identifier SI-RNTI, where the first physical downlink control channel indicates the plurality of cell common parameters.

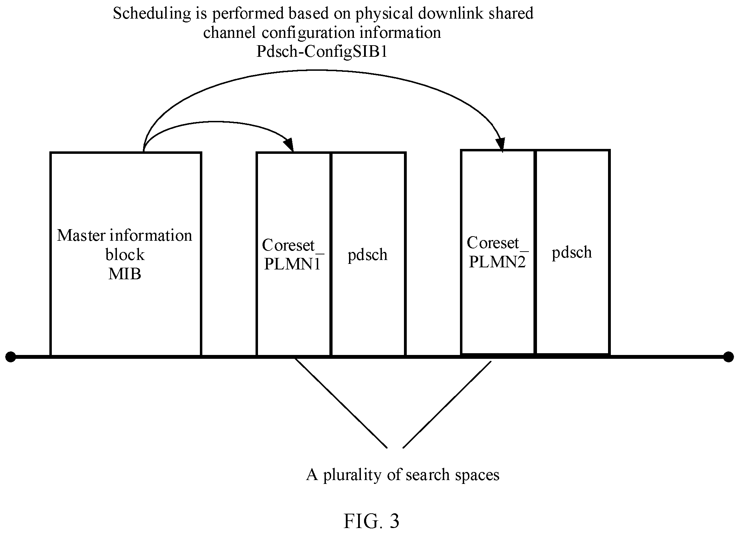

For example, FIG. 3 is a diagram in which a first apparatus configures a plurality of PDCCH search spaces and indication manners according to this application. The first apparatus may configure a plurality of PDCCH search spaces (for example, Coreset_PLMN1 and Coreset_PLMN2 shown in FIG. 3) by using physical downlink shared channel (physical downlink shared channel) configuration information (for example, pdsch-ConfigSIB1) in a MIB. The plurality of PDCCH search spaces include the plurality of pieces of control information (for example, a PDCCH search space includes control information corresponding to the PDCCH search space). The plurality of pieces of control information are used for a terminal to receive the corresponding cell common parameters. For example, the terminals served by the different PLMNs search for corresponding control information in corresponding PDCCH search spaces, to receive a SIB1 message and obtain the corresponding cell common parameters.

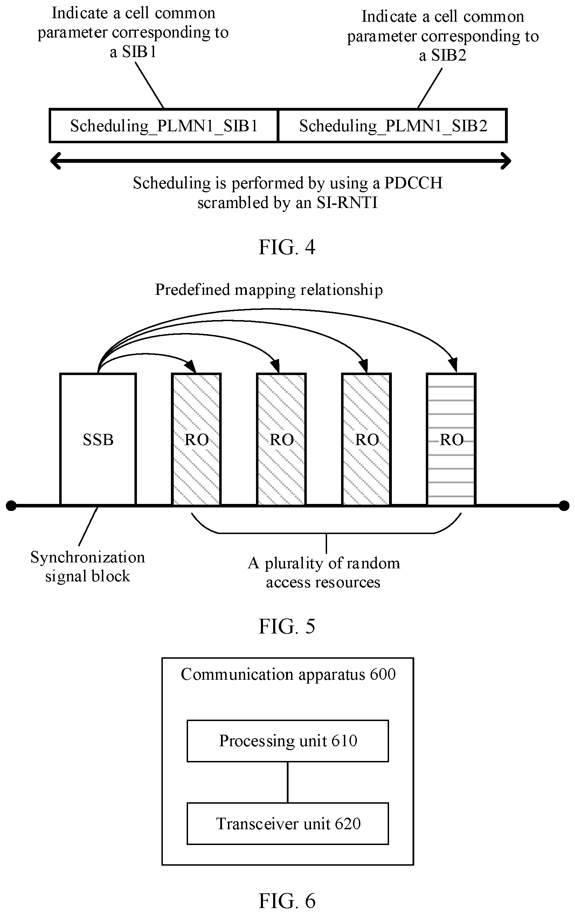

For another example, FIG. 4 is a diagram of scheduling a plurality of cell common parameters by using a PDCCH scrambled by using an SI-RNTI according to this application. The first apparatus may send downlink control information (downlink control information, DCI), where the DCI may be scrambled by using the SI-RNTI, the DCI may be carried on the PDCCH, and the PDCCH indicates the plurality of cell common parameters (for example, a cell common parameter corresponding to a SIB1 and a cell common parameter corresponding to a SIB2). Correspondingly, the terminals served by different PLMNs may receive the PDCCH, to receive corresponding cell common parameters.

In an example, the first apparatus may further perform differentiated allocation on random access resources (for example, random occasion (random occasion, RO) resources) in the first cell, so that one or more random access resources may be allocated to the terminals served by the different PLMNs. The following uses an example in which the first cell is shared by two different PLMNs for description. For example, FIG. 5 is a diagram of a mapping relationship between a synchronization signal block (Synchronization Signal/PBCH (physical broadcast channel) Block, SSB) and an RO resource according to this application. The SSB resource and the RO resource meet a predefined mapping relationship, but quantities of users of different PLMNs in a same area are different. In this case, the first apparatus may allocate RO resources in a differentiated manner. For example, in FIG. 5, three RO resources with the diagonal hatching are allocated to a first PLMN, and one RO resource with the horizontal hatching is allocated to a second PLMN.

In a possible implementation, the first apparatus sends first indication information, where the first indication information indicates one or more random access resources allocated to the terminals served by the different PLMNs in the first cell. For example, the first indication information may indicate, by using a bitmap (bitmap) implementation, the random access resources allocated to the different PLMNs. For example, it is assumed that the bitmap is indicated as 1110, indicating that the first three RO resources are allocated to the first PLMN, and the last RO resource is allocated to the second PLMN. Correspondingly, a terminal served by the first PLMN receives the first indication information, to perform random access by using a corresponding RO resource.

Optionally, any one of the one or more random access resources is exclusively used by one network or shared by a plurality of networks. For example, a single RO resource may be exclusively used by the first PLMN, or may be shared by the first PLMN and the second PLMN (for example, the RO resource is shared in a manner like time division multiplexing or frequency division multiplexing).

Optionally, one RO resource may include a plurality of preambles (preambles). For example, one RO resource may include a maximum of 64 preambles. The first apparatus may group the plurality of preambles (for example, the plurality of preambles are divided into two groups, and each group may include a plurality of preambles). The first apparatus sends the first indication information, where the first indication information may specifically indicate two groups of preambles, one group of preambles is allocated to the first PLMN, and the other group of preambles is allocated to the second PLMN. Correspondingly, the terminal served by the first PLMN receives the first indication information, to perform random access by using a corresponding preamble resource.

In an example, because mobility management policies of different PLMNs may be different, the first apparatus may configure differentiated mobility management parameters for the different PLMNs in the first cell. For example, the first apparatus separately configures a plurality of mobility management parameters for the terminals served by the different PLMNs in the first cell, and the first apparatus sends the plurality of mobility management parameters. The mobility management parameter may include but is not limited to parameters such as paging configuration information and a paging resource. Specifically, the paging resource includes a resource used for paging, for example, a time domain resource and a frequency domain resource, and the paging configuration information includes information such as a user identifier and a system frame number.

In a possible implementation, the first apparatus sends a first system message of the first cell, where the first system message includes the plurality of mobility management parameters. For example, the first system message is a SIB1, and the first apparatus broadcasts the SIB1, where the SIB1 carries a plurality of mobility management parameters (for example, a plurality of paging control channel configurations (PCCH (paging control channel)-Config)) for different PLMNs, so that the SIB1 indicates differentiated mobility management parameters. Optionally, the first system message and the first system message that carries the plurality of cell common parameters described above may be a same SIB1, to be specific, the first apparatus broadcasts the plurality of cell common parameters and the plurality of mobility management parameters by using the SIB1. Alternatively, the two first system messages may be different, to be specific, the first apparatus broadcasts the plurality of cell common parameters and the plurality of mobility management parameters by using a plurality of SIB1s. This is not limited in this application.

In a possible implementation, the first apparatus sends paging (paging) messages in different system frames, where the different system frames are associated with the different PLMNs. For example, the first apparatus may distinguish between the different PLMNs by using the different system frames in a same paging period, and send corresponding paging messages in the different system frames. Correspondingly, the terminals served by the different PLMNs retrieve the paging messages in system frames whose system frame numbers meet a first condition, where the first condition may be represented as follows: (*SFN + PF_offset*) *mod T =* (*T div N)* * (*UE_ID mod N*). SFN represents a system frame number (system frame number); *PF_offset* represents a frame number offset, where different PLMNs are associated by using a parameter nAndPagingFrameOffset in PCCH-Config, in other words, *PF_offset* may indicate the different PLMNs; T represents a paging cycle; and UE_ID represents a terminal identifier. The terminals may retrieve the paging messages in the system frames whose system frame numbers meet the first condition, so that the terminals served by the different PLMNs can receive the paging messages in the different system frames in the same paging period, to obtain corresponding mobility management parameters.

In a possible implementation, the first apparatus sends a second physical downlink control channel scrambled by a paging radio network temporary identifier P-RNTI, where the second physical downlink control channel indicates the plurality of mobility management parameters. For example, the first apparatus may send DCI, where the DCI may be scrambled by using the P-RNTI, the DCI may be carried on the PDCCH, and the PDCCH indicates the plurality of mobility management parameters (for example, a mobility management parameter corresponding to a SIB1 and a mobility management parameter corresponding to a SIB2). Correspondingly, the terminals served by the different PLMNs may receive the PDCCH, to receive corresponding paging resources.

In a possible implementation, when paging configurations of the first cell are consistent, for example, when the terminals served by the different PLMNs in the first cell retrieve paging messages on a same time-frequency domain resource, because user identifiers carried in the paging messages may be the same, it is assumed in this application that a first identifier is added to the paging message, where the first identifier indicates terminals that are served by different PLMNs and have a same user identifier in the first cell. For example, the first apparatus sends a paging message, where the paging message includes the first identifier. Specifically, the first apparatus may broadcast the paging message, to broadcast the first identifier. Correspondingly, a terminal receives the paging message, and determines, based on the first identifier in the paging message, whether the paging message is a paging message for the terminal. Optionally, the first identifier may be an identifier of a PLMN. For example, the first identifier is an identifier of a first PLMN or an identifier of a second PLMN. Alternatively, the first identifier may be another incremental indication, for example, it is assumed that a user identifier carried in the paging message is a 5G-S-TMSI, where AMF Set ID+AMF Pointer+5G-TMSI is formed, a same 5G-S-TMSI may be allocated to two terminals served by different PLMNs, and then the first identifier may be an incremental indication based on the user identifier, and is used to distinguish the terminals served by the different PLMNs and having the same user identifier in the first cell.

In an example, when performing mobility management, a terminal located in the first cell may preferentially select a cell on which a PLMN serving the terminal camps. Therefore, the first apparatus may configure different priority parameters in the mobility management parameters. In a possible implementation, the first apparatus separately configures a plurality of cell measurement parameters for the terminals served by the different PLMNs in the first cell, and the first apparatus sends the plurality of cell measurement parameters. The cell measurement parameter may include but is not limited to parameters such as frequency information, priority information, and a measurement start condition. The frequency information includes information related to a measurement frequency used when a terminal performs mobility management. The priority information indicates that the terminal preferentially selects, when performing mobility management, a cell on which a PLMN serving the terminal camps. The measurement start condition may include but is not limited to parameters such as signal strength, a user location, and start time. For example, when the signal strength of the terminal is lower than a preset threshold, the terminal may start measurement during mobility management; or when the user location of the terminal is not located in a coverage area of a current cell, the terminal may start measurement during mobility management. A specific implementation is not limited in this application.

In a possible implementation, the first apparatus configures a plurality of cell measurement parameters in a plurality of system messages, and sends the plurality of system messages. For example, the first apparatus may configure a plurality of cell measurement parameters in a SIB2/SIB3/SIB4, where the plurality of cell measurement parameters separately correspond to different PLMNs.

In another possible implementation, the first apparatus sends a first system message of the first cell, where the first system message indicates a plurality of SIB2s/SIB3s/SIB4s. The plurality of SIB2s/SIB3s/SIB4s are separately associated with different PLMNs, and the plurality of SIB2s/SIB3s/SIB4s correspond to a plurality of cell measurement parameters; or the plurality of SIB2s/SIB3s/SIB4s carry a plurality of cell measurement parameters, and the plurality of cell measurement parameters are separately associated with different PLMNs. A specific implementation is not limited in this application.

S103: The second apparatus configures a corresponding cell common parameter.

In a possible implementation, after the plurality of cell common parameters are received, the second apparatus may determine, based on information about a PLMN network (for example, a PLMN identifier) to which the second apparatus belongs, the cell common parameter corresponding to the second apparatus, and configure the corresponding cell common parameter.

Optionally, the second apparatus may further receive configuration information such as a mobility management parameter and a cell measurement parameter. In this case, the second apparatus may further configure the corresponding mobility management parameter and the corresponding cell measurement parameter. For example, the second apparatus may retrieve a paging message in the system frames whose system frame numbers meet the first condition, and if the corresponding paging message is found, receive the mobility management parameter carried in the corresponding paging message. For another example, the second apparatus receives the plurality of SIB2s/SIB3s/SIB4s, and may determine, based on the PLMN identifier of the PLMN network to which the second apparatus belongs, an SIB corresponding to the second apparatus, to determine the cell measurement parameter corresponding to the second apparatus. A specific implementation is not limited in this application.

In this embodiment, the first apparatus may configure different cell common parameters, different mobility management parameters, different cell measurement parameters, or the like for the terminals served by the different PLMNs, and send the foregoing parameters to the terminals through signaling, to provide differentiated cell configurations, paging configurations, measurement configurations, or the like for the terminals served by the different PLMNs in the shared cell.

It may be understood that, to implement the functions of the devices in the foregoing embodiments, the base station and the terminal include corresponding hardware structures and/or software modules for performing the functions. A person skilled in the art should easily be aware that, in combination with the units and method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

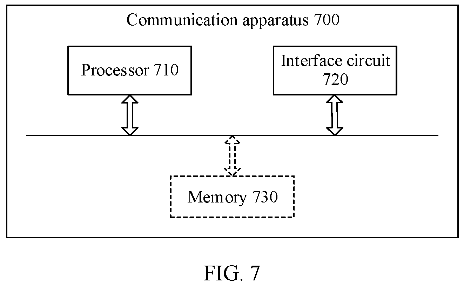

FIG. 6 and FIG. 7 are diagrams of possible communication apparatuses according to this application. These communication apparatuses may be configured to implement the functions of the first apparatus (for example, a base station) or the second apparatus (for example, a terminal) in the foregoing method embodiments, and therefore can also implement beneficial effects of the foregoing method embodiments. In embodiments of this application, the communication apparatus may be the terminal shown in FIG. 1, or may be the access network device shown in FIG. 1, or may be a module (for example, a chip) used in the terminal or the access network device.

As shown in FIG. 6, a communication apparatus 600 includes a processing unit 610 and a transceiver unit 620. The communication apparatus 600 is configured to implement the functions of the terminal or the access network device in the method embodiments shown in FIG. 2 to FIG. 5. Optionally, the transceiver unit 620 includes a sending unit and a receiving unit, and the transceiver unit 620 may also be referred to as a communication unit.

When the communication apparatus 600 is configured to implement the functions of the access network device in the method embodiment shown in FIG. 2, the processing unit 610 is configured to separately configure, for terminals served by different public land mobile networks PLMNs in a first cell, a plurality of cell common parameters, where the different PLMNs in the first cell share an access network resource. The transceiver unit 620 is configured to send the plurality of cell common parameters.

In a possible implementation, that the transceiver unit 620 is configured to send the plurality of cell common parameters includes:
sending a first system message of the first cell, where the first system message includes a plurality of cell common parameters.

In a possible implementation, that the transceiver unit 620 is configured to send the plurality of cell common parameters includes:
scheduling at least one second system message in the first cell, where the at least one second system message indicates corresponding cell common parameters.

In a possible implementation, that the transceiver unit 620 is configured to send the plurality of cell common parameters includes:
configuring a plurality of physical downlink control channel search spaces, where the plurality of physical downlink control channel search spaces include a plurality of pieces of control information, and the plurality of pieces of control information are used for a terminal to receive corresponding cell common parameters; or
sending a first physical downlink control channel scrambled by a system information radio network temporary identifier SI-RNTI, where the first physical downlink control channel indicates the plurality of cell common parameters.

In a possible implementation, the transceiver unit 620 is further configured to:
sending first indication information, where the first indication information indicates one or more random access resources allocated to the terminals served by the different PLMNs in the first cell.

In a possible implementation, the processing unit 610 is further configured to separately configure a plurality of mobility management parameters for the terminals served by the different PLMNs in the first cell; and the transceiver unit 620 is further configured to send the plurality of mobility management parameters.

In a possible implementation, that the transceiver unit 620 is configured to send the plurality of mobility management parameters includes:
sending a first system message of the first cell, where the first system message includes the plurality of mobility management parameters.

In a possible implementation, that the transceiver unit 620 is configured to send the plurality of mobility management parameters includes:
sending paging messages in different system frames, where the different system frames are associated with the different PLMNs.

In a possible implementation, that the transceiver unit 620 is configured to send the plurality of mobility management parameters includes:
sending a second physical downlink control channel scrambled by a P-RNTI, where the second physical downlink control channel indicates the plurality of mobility management parameters.

In a possible implementation, the transceiver unit 620 is further configured to:
sending a paging message, where the paging message includes a first identifier, and the first identifier indicates terminals that are served by different PLMNs and have a same user identifier in the first cell.

In a possible implementation, the processing unit 610 is further configured to separately configure a plurality of cell measurement parameters for the terminals served by the different PLMNs in the first cell; and the transceiver unit 620 is further configured to send the plurality of cell measurement parameters.

It can be learned that, when the communication apparatus 600 is configured to implement the functions of the access network device in the method embodiment shown in FIG. 2, the communication apparatus 600 may configure, for terminals served by different PLMNs, different cell common parameters, and send the different cell common parameters to the terminals through signaling, to provide differentiated cell configurations for the terminals served by the different PLMNs in a shared cell.

When the communication apparatus 600 is configured to implement the functions of the terminal in the method embodiment shown in FIG. 2, the transceiver unit 620 is configured to receive a plurality of cell common parameters separately configured by a first apparatus for terminals served by different PLMNs in a first cell, where the different PLMNs in the first cell share an access network resource. The processing unit 610 is configured to configure corresponding cell common parameters.

In a possible implementation, that the transceiver unit 620 is configured to receive the plurality of cell common parameters separately configured by the first apparatus for the terminals served by the different PLMNs in the first cell includes:
receiving a first system message of the first cell, where the first system message includes the plurality of cell common parameters.

In a possible implementation, that the transceiver unit 620 is configured to receive the plurality of cell common parameters separately configured by the first apparatus for the terminals served by the different PLMNs in the first cell includes:
obtaining at least one second system message based on a first system message of the first cell, where the at least one second system message indicates corresponding cell common parameters.

In a possible implementation, that the transceiver unit 620 is configured to receive the plurality of cell common parameters separately configured by the first apparatus for the terminals served by the different PLMNs in the first cell includes:
retrieving corresponding control information in a plurality of physical downlink control channel search spaces, and receiving a corresponding cell common parameter; or
receiving a first physical downlink control channel scrambled by an SI-RNTI, where the first physical downlink control channel indicates the plurality of cell common parameters.

In a possible implementation, the transceiver unit 620 is further configured to:
receive first indication information, where the first indication information indicates one or more random access resources allocated to the terminals served by the different PLMNs in the first cell.

In a possible implementation, the transceiver unit 620 is further configured to receive a plurality of mobility management parameters that are separately configured by the first apparatus for the terminals served by the different PLMNs in the first cell; and the processing unit 610 is further configured to configure corresponding mobility management parameters.

In a possible implementation, that the transceiver unit 620 is further configured to receive the plurality of mobility management parameters that are separately configured by the first apparatus for the terminals served by the different PLMNs in the first cell includes:
receive a first system message of the first cell, where the first system message includes the plurality of mobility management parameters.

In a possible implementation, that the transceiver unit 620 is further configured to receive the plurality of mobility management parameters that are separately configured by the first apparatus for the terminals served by the different PLMNs in the first cell includes:
retrieving paging messages in system frames whose system frame numbers meet a first condition, where different system frames are associated with the different PLMNs.

In a possible implementation, that the transceiver unit 620 is further configured to receive the plurality of mobility management parameters that are separately configured by the first apparatus for the terminals served by the different PLMNs in the first cell includes:
receiving a second physical downlink control channel scrambled by a P-RNTI, where the second physical downlink control channel indicates the plurality of mobility management parameters.

In a possible implementation, the transceiver unit 620 is further configured to:
receive a paging message, where the paging message includes a first identifier, and the first identifier indicates terminals that are served by different PLMNs and have a same user identifier in the first cell.

In a possible implementation, the transceiver unit 620 is further configured to receive a plurality of cell measurement parameters that are separately configured by the first apparatus for the terminals served by the different PLMNs in the first cell; and the processing unit 610 is further configured to configure corresponding cell measurement parameters.

It can be learned that, when the communication apparatus 600 is configured to implement the functions of the terminal in the method embodiment shown in FIG. 2, the communication apparatus 600 may receive signaling sent by the first apparatus, to obtain different cell common parameters, so as to implement differentiated cell configurations for the terminals served by the different PLMNs in the shared cell.

For more detailed descriptions of the processing unit 610 and the transceiver unit 620, refer to related descriptions in the method embodiments shown in FIG. 2 to FIG. 5.

As shown in FIG. 7, a communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, or input data required by the processor 710 to run instructions, or data generated after the processor 710 runs instructions. Sometimes, the interface circuit 720 may also be understood as a part of the processor 710. In this case, the communication apparatus 700 includes the processor 710. Optionally, the transceiver includes a transmitter and a receiver.

When the communication apparatus 700 is configured to implement the method embodiments shown in FIG. 2 to FIG. 5, the processor 710 is configured to implement a function of the processing unit 610, and the interface circuit 720 is configured to implement a function of the transceiver unit 620.

When the communication apparatus is a chip used in a terminal, the chip in the terminal implements the functions of the terminal in the foregoing method embodiments. That the chip in the terminal receives information from a base station may be understood as that the information is first received by another module (for example, a radio frequency module or an antenna) in the terminal, and then sent by the module to the chip in the terminal. That the chip in the terminal sends information to a base station may be understood as that the information is first sent to another module (for example, a radio frequency module or an antenna) in the terminal, and then sent to the base station by the module.

When the communication apparatus is a chip used in a base station, the chip in the base station implements a function of the base station in the method embodiments. That the chip in the base station receives information from a terminal may be understood as that the information is first received by another module (for example, a radio frequency module or an antenna) in the base station, and then sent by the module to the chip in the base station. That the chip in the base station sends information to a terminal may be understood as that the information is first sent to another module (for example, a radio frequency module or an antenna) in the base station, and then sent to the terminal by the module.

In this application, that an entity A sends information to an entity B may be that A directly sends the information to B, or may be that A indirectly sends the information to B via another entity. Similarly, that the entity B receives the information from the entity A may be that the entity B directly receives the information sent by the entity A, or may be that the entity B indirectly receives the information sent by the entity A via another entity. The entities A and B herein each may be a RAN node or a terminal, or may be a module in a RAN node or a terminal. Information receiving and sending may be information exchange between a RAN node and a terminal, for example, information exchange between a base station and a terminal. Information receiving and sending may alternatively be information exchange between two RAN nodes, for example, information exchange between a CU and a DU. Information receiving and sending may alternatively be information exchange between different modules in an apparatus, for example, information exchange between a chip in a terminal and another module in the terminal, or information exchange between a chip in a base station and another module in the base station.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, such as encoding and modulation, may be performed on information between the source end for sending the information and the destination end, but the destination end may understand valid information from the source end. Similar descriptions in this application may be understood similarly, and details are not described again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist as discrete components in the base station or the terminal.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, all or some of procedures or functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

In embodiments of this application, if there is no special description or logic conflict, terms and/or descriptions in different embodiments are consistent and may be mutually referenced. Technical features in different embodiments may be combined to form a new embodiment based on an internal logical relationship between the technical features.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

In this application, words such as "first" and "second" may be used to distinguish between technical features having a same or similar function. The words such as "first" and "second" do not limit a quantity and an execution sequence, and the words such as "first" and "second" do not limit a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. The word such as "example" or "for example" is used to present a related concept in a specific manner for ease of understanding.

In embodiments of this application, "indication" may include a direct indication and an indirect indication, or may include an explicit indication and an implicit indication. Information indicated by specific information (for example, indication information in the following descriptions) is referred to as to-be-indicated information. In this case, during specific implementation, the to-be-indicated information may be indicated in a plurality of manners, for example, but not limited to: The to-be-indicated information may be directly indicated, for example, the to-be-indicated information or an index of the to-be-indicated information is indicated. Alternatively, the to-be-indicated information may be indirectly indicated by indicating other information, where there is an association relationship between the other information and the to-be-indicated information. Alternatively, only a part of the to-be-indicated information may be indicated, and a remaining part of the to-be-indicated information is known or pre-agreed upon. For example, specific information may be indicated by an arrangement sequence of a plurality of pieces of information that is pre-agreed upon (for example, predefined in a protocol), to reduce indication overheads to some extent. A specific indication manner is not limited in this application. It can be understood that, for a transmitter of the indication information, the indication information may indicate the to-be-indicated information, and for a receiver of the indication information, the indication information may be used to determine the to-be-indicated information.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
separately configuring, for terminals served by different public land mobile networks PLMNs in a first cell, a plurality of cell common parameters, wherein the different PLMNs in the first cell share an access network resource; and
sending the plurality of cell common parameters.

2. The method according to claim 1, wherein sending the plurality of cell common parameters comprises:
sending a first system message of the first cell, wherein the first system message comprises the plurality of cell common parameters.

3. The method according to claim 1, wherein sending the plurality of cell common parameters comprises:
scheduling at least one second system message in the first cell, wherein the at least one second system message indicates corresponding cell common parameters.

4. The method according to claim 1, wherein sending the plurality of cell common parameters comprises:
configuring a plurality of physical downlink control channel search spaces, wherein the plurality of physical downlink control channel search spaces comprise a plurality of pieces of control information, and the plurality of pieces of control information are used for a terminal to receive corresponding cell common parameters; or
sending a first physical downlink control channel scrambled by a system information radio network temporary identifier SI-RNTI, wherein the first physical downlink control channel indicates the plurality of cell common parameters.

5. The method according to claim 1, wherein the method further comprises:
sending first indication information, wherein the first indication information indicates one or more random access resources allocated to the terminals served by the different PLMNs in the first cell.

6. The method according to claim 5, wherein any one of the one or more random access resources is exclusively used by one network or shared by a plurality of networks.

7. The method according to claim 1, wherein the method further comprises:
separately configuring, for the terminals served by the different PLMNs in the first cell, a plurality of mobility management parameters; and
sending the plurality of mobility management parameters.

8. The method according to claim 7, wherein sending the plurality of mobility management parameters comprises:
sending a first system message of the first cell, wherein the first system message comprises the plurality of mobility management parameters.

9. The method according to claim 7, wherein sending the plurality of mobility management parameters comprises:
sending paging messages in different system frames, wherein the different system frames are associated with the different PLMNs.

10. The method according to claim 7, wherein sending the plurality of mobility management parameters comprises:
sending a second physical downlink control channel scrambled by a paging radio network temporary identifier P-RNTI, wherein the second physical downlink control channel indicates the plurality of mobility management parameters.

11. The method according to claim 7, wherein the method further comprises:
sending a paging message, wherein the paging message comprises a first identifier, and the first identifier indicates terminals that are served by different PLMNs and have a same user identifier in the first cell.

12. The method according to claim 1, wherein the method further comprises:
separately configuring, for the terminals served by the different PLMNs in the first cell, a plurality of cell measurement parameters; and
sending the plurality of cell measurement parameters.

13. A communication method, wherein the method comprises:
receiving a plurality of cell common parameters that are separately configured by a first apparatus for terminals served by different PLMNs in a first cell, wherein the different PLMNs in the first cell share an access network resource; and
configuring corresponding cell common parameters.

14. The method according to claim 13, wherein receiving the plurality of cell common parameters that are separately configured by the first apparatus for the terminals served by the different PLMNs in the first cell comprises:
receiving a first system message of the first cell, wherein the first system message comprises the plurality of cell common parameters.

15. The method according to claim 13, wherein receiving the plurality of cell common parameters that are separately configured by the first apparatus for the terminals served by the different PLMNs in the first cell comprises:
obtaining at least one second system message based on a first system message of the first cell, wherein the at least one second system message indicates corresponding cell common parameters.

16. The method according to claim 13, wherein receiving the plurality of cell common parameters that are separately configured by the first apparatus for the terminals served by the different PLMNs in the first cell comprises:
retrieving corresponding control information in a plurality of physical downlink control channel search spaces, and receiving a corresponding cell common parameter; or
receiving a first physical downlink control channel scrambled by a system information radio network temporary identifier SI-RNTI, wherein the first physical downlink control channel indicates the plurality of cell common parameters.

17. The method according to claim 13, wherein the method further comprises:
receiving first indication information, wherein the first indication information indicates one or more random access resources allocated to the terminals served by the different PLMNs in the first cell.

18. The method according to claim 17, wherein any one of the one or more random access resources is exclusively used by one network or shared by a plurality of networks.

19. The method according to claim 13, wherein the method further comprises:
receiving a plurality of mobility management parameters that are separately configured by the first apparatus for the terminals served by the different PLMNs in the first cell; and
configuring corresponding mobility management parameters.

20. The method according to claim 19, wherein receiving the plurality of mobility management parameters that are separately configured by the first apparatus for the terminals served by the different PLMNs in the first cell comprises:
receiving a first system message of the first cell, wherein the first system message comprises the plurality of mobility management parameters.

21. The method according to claim 19, wherein receiving the plurality of mobility management parameters that are separately configured by the first apparatus for the terminals served by the different PLMNs in the first cell comprises:
retrieving paging messages in system frames whose system frame numbers meet a first condition, wherein different system frames are associated with the different PLMNs.

22. The method according to claim 19, wherein receiving the plurality of mobility management parameters that are separately configured by the first apparatus for the terminals served by the different PLMNs in the first cell comprises:
receiving a second physical downlink control channel scrambled by a paging radio network temporary identifier P-RNTI, wherein the second physical downlink control channel indicates the plurality of mobility management parameters.

23. The method according to claim 19, wherein the method further comprises:
receiving a paging message, wherein the paging message comprises a first identifier, and the first identifier indicates terminals that are served by different PLMNs and have a same user identifier in the first cell.

24. The method according to claim 13, wherein the method further comprises:
receiving a plurality of cell measurement parameters that are separately configured by the first apparatus for the terminals served by the different PLMNs in the first cell; and
configuring corresponding cell measurement parameters.

25. A communication apparatus, comprising a communication unit and a processing unit, wherein the communication unit and the processing unit are configured to perform the method according to any one of claims 1 to 12 or claims 13 to 24.

26. A communication apparatus, comprising a processor and an interface circuit, wherein the interface circuit is configured to: receive a signal from another communication apparatus and transmit the signal to the processor, or send a signal from the processor to another communication apparatus; and the processor is configured to implement the method according to any one of claims 1 to 12 or claims 13 to 24 via a logic circuit or by executing code instructions.

27. A computer-readable storage medium, wherein the computer-readable storage medium stores a computer program or instructions, and when the computer program or the instructions are executed by a communication apparatus, the method according to any one of claims 1 to 12 or claims 13 to 24 is implemented.

28. A computer program product, comprising instructions, wherein when the instructions are run on a computer, the computer is enabled to perform the method according to any one of claims 1 to 12 or claims 13 to 24.

29. A chip, wherein the chip comprises a processor, and the processor is configured to execute a computer program, so that the chip implements the method according to any one of claims 1 to 12 or claims 13 to 24.

30. A chip system, wherein the chip system comprises a processor and an interface, and the processor is configured to execute a computer program, so that the chip system implements the method according to any one of claims 1 to 12 or claims 13 to 24.
